# EUROPEAN PATENT APPLICATION

(11) **EP 0 681 133 A2**
(43) Date of publication of application: **08.11.1995**
(21) Application number: 95303006.1
(22) Date of filing: 02.05.1995
(51) Int. Cl.: F16L 3/223

(54) **Fastener for lines**

(30) Priority: 06.05.1994 DE 9407618 U
(71) Applicant: EMHART INC., Newark, Delaware 19711 (US)
(72) Inventor: Schaty, Hans, D-6330 Wetzlar 17 (DE); Hahn, Ernst-Ludwig, D-6301 Rabenau (DE)
(74) Representative: Stagg, Diana Christine

(57) **Abstract**

A fastener for lines (5) comprises a beam-like lower part (1) having at least one first resilient bay (3) which is adapted to the line (5) to be fastened and a closing stirrup-shaped upper part (2) having at least one second resilient bay (4) which is adapted to the line (5) to be fastened. The upper part (2) and/or the lower part (1) has at least one cavity (17,18) which gives the device resilience.

## Description

The invention relates to a fastener for lines. The lines are elongate articles such as tubes or cables which are to be fastened on a support or are to be connected to one another and kept apart. The support is, in particular, a vehicle body, and the lines are liquid-carrying lines such as fuel lines, brake lines or electric cables.

A fastener of this type is described, for example, in German Gebrauchsmuster application G 94 06 076.9 which was not published at the priority date of the present application. The device described therein is particularly suitable for the fastening of a line element, the device being capable of holding lines having a specific diameter range. It has also been proposed in this application that the fastener be designed for several lines. The holding stirrups used in the device have excellent vibration-damping properties but are too complicated or too bulky for some applications. The respective cross section and diameter of the lines to be fastened are often predetermined, so holding in this way with the proposed holding stirrups is not absolutely essential.

It is an object of the present invention to provide a simple fastener for lines having predetermined diameters which is easy to produce and handle, wherein the lines are not to be rigidly fastened.

The present invention provides a fastener for lines characterised in that the device comprises a beam-like lower part having at least one first resilient bay which is adapted to the line to be fastened, a closing stirrup-shaped upper part having at least one second resilient bay which is adapted to the line to be fastened, the upper part and/or the lower part having at least one cavity which gives the device resilience.

The fastener has a beam-shaped lower part and a closing stirrup-shaped upper part. The lower part as well as the upper part have at least one bay for the line to be received, of which there is at least one, the number and shape of the bays being adapted to the lines to be fastened. The bays have a certain degree of resilience relative to the remainder of the upper part or the lower part. This is achieved in that cavities are provided in the lower part and/or in the upper part and result in the resilience of the bays. Owing to the cavities, the lines to be fastened can be released in a vibratory manner from a support on which the fastener can be fixed.

In a preferred embodiment, the lower part is formed from a first base beam over which there extends a bridge supported at the ends of the base beam. The bridge is designed such that it has the first bays on its upper side. A cavity which is completely surrounded is established by the bridge, the base beam and the supporting regions at the ends of the base beam. This cavity allows deformation or displacement of the bridge relative to the base beam.

In a further preferred embodiment, the upper part is also formed from a base beam. At least one resilient holding stirrup is shaped beneath this second base beam. In a preferred embodiment, a resilient holding stirrup is shaped, the stirrup ends being arranged in the region of the ends of the second base beam. In an alternative embodiment there is provided a plurality of holding stirrups which are arranged next to one another along the second base beam. A second cavity which is completely surrounded is established between the second base beam and the stirrup(s) located above it. It is particularly desirable if there are no struts which extend rectilinearly and at right angles from the holding stirrups to the base beams and would reduce the resilience of the line holder.

Further cavities are preferably provided in the region of the base beams of the upper part and/or the lower part to enable the lines held by the fastener to move to a certain extent relative to the periphery of the device, in particular at a point on the periphery at which the device is secured to a support, without merely being held slackly.

In a particularly preferred embodiment, the upper part and the lower part are connected to one another in an end region via a hinge-like joint. A snap connection with which these ends can be connected in a closed position is provided at the ends remote from the joint. In the closed position, first bays in the lower part and second bays in the upper part are opposed to one another, establishing regions which can be taken in by lines which are to be fastened. In the closed position, the lines lying in the bays are held in a tong-like manner. In the closed position, the first bays in the lower part and the second bays in the upper part are deformed slightly so the lines can be held securely without play between the upper part and the lower part.

The hinge-like joint particularly preferably consists of at least one joint lug and accordingly at least one joint pin. The peripheral cross section of the joint pin is smaller than the orifice of the joint lug. The drawback of the tong effect is therefore avoided, higher forces occurring in the vicinity of the joint axis than at a point further removed from the joint axis. If several lines are fastened between upper part and lower part, all lines can be held substantially with the same holding force. This can be achieved owing to the play provided between the joint pin and the joint lugs.

In a particularly preferred embodiment, a joint catching nose and a joint catching beam are provided in the region of the hinge-like joint. Joint catching nose and joint catching beam can be brought into engagement in the closed position of the fastener. The joint catch beam catches in the joint catch nose within a catch path permitted by the play present in the joint. The snap connection provided in the region of the hinge-like joint is particularly advantageous in conjunction with the snap connection provided at the ends of the lower part or of the upper part remote from the joint. Owing to this measure, a predetermined fastening position between the upper part and the lower part is established despite the play existing in the joint, while the hinge-like joint simultaneously prevents the upper part and lower part from becoming detached from one another in the open state.

In a particularly preferred embodiment, the joint catch nose and the joint catch beam are arranged in a region between two joint lugs and two joint pins. Alternatively, the joint catch nose can be shaped on the joint pin and the joint catch beam is formed by an elongate portion of the joint lug. This corresponds to the arrangement of a catch joint according to the above-mentioned German Gebrauchsmuster application G 94 06 076.9 belonging to the same Applicants, which was not anticipated.

When using holding stirrups and bridge over a respective base beam of the upper part or of the lower part it is particularly advantageous that the bridge has greater rigidity than the holding stirrup. This ensures that essentially only the holding stirrups are deformed during closure of the fastener. The position of the lines held by the fastener with respect to a support is thus substantially established by the more rigid bridge.

It is also preferable to shape the first bays in such a way that the lines which can be held therein are surrounded by more than 180°. The lines are then inserted into the first bays with slight pressure and are also held therein to a certain extent. This means a particular advantage during use of the device for assembly, if several lines are to be held. The lines are in fact secured on the still open device before closure of the fastener.

The lines to be fastened in the fastener preferably have a round cross section. It is also preferable to fasten more than two lines, preferably four lines, with the device. The lines can be of different diameters. It is preferable to provide a weld stud receiver in the lower part or in the upper part in order to connect the fastener to a support. However, any conventional methods of connection such as screws, rivets, adhesion, etc. are feasible for connecting the fastener to a support.

The fastener is preferably produced by the injection moulding of plastics. The so-called single shot process is particularly preferred during production. This is particularly advantageous if the upper part and the lower part are connected with a hinge-like joint. With the single shot process, the fastener can be produced as a unit, i.e. the hinge-like joint nests during the moulding process. However, there are two separate parts. A fastener produced in this way is particularly advantageous for assembly as it can be used directly in the form in which it is removed from the moulding process. It is not necessary to handle two separate parts during assembly of the fastener.

Alternative embodiments of a fastener according to the invention will now be further described with reference to the accompanying drawings.

Figure 1 shows a first embodiment of the fastener according to the invention in the open state.

Figure 2 shows the embodiment of Figure 1 in the closed state with inserted lines.

Figure 3 shows an enlarged cross section from the joint region.

Figure 4 shows a second embodiment of the fastener according to the invention in the open state.

Figure 5 shows the embodiment of Figure 2 in the closed state with inserted lines.

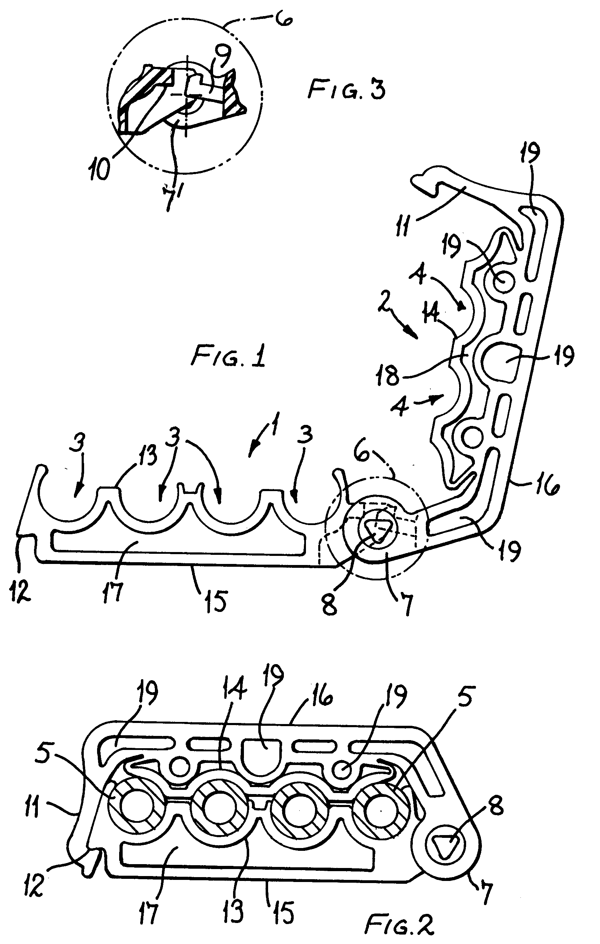

Figure 1 shows a first embodiment of the fastener according to the invention with which four lines of substantially equal diameter can be fastened. The device consists of a beam-like lower part 1 and a closing stirrup-like upper part 2, the two parts being connected at one end via a hinge-like joint 6. The lower part 1 has a catch nose 12 at the end remote from the joint region 6. The upper part 2 has, at the end remote from the hinge-like joint 6, a catch beam 11 which can be brought into engagement with the catch nose 12. The lower part 1 is made up of a base beam 15 and a bridge 13 which is supported at the ends of the base beam 15 on the base beam 15.

The base beam 15, the bridge 13 and the props at the ends of the lower part limit a cavity 17 which is completely surrounded. In this embodiment, the bridge 13 is designed to be unsupported between the props at the ends of the lower part. However, further props can be provided in the central region of the bridge 13 so the cavity 17 is divided into several smaller cavities.

The upper side of the bridge 13 is structured such that it has a first respective bay 3 for each of the lines. The first bays 3 are designed for a specific nominal diameter of lines to be received therein. The bridge 13 has substantially the same thickness at each point so one side of the first cavity 17 substantially follows the shape of the bays 3. The bays 3 also have a centering function for the lines to be received therein.

The upper part 2 is formed from a closing stirrup 16 beneath which a holding stirrup 14 extends. The ends of the holding stirrup 14 are arranged in the region of the ends of the closing stirrup 16, the ends preferably being able to extend in a bent or kinked manner in order to increase the elasticity of the entire configuration. The holding stirrup 14 is shaped such that it has two bays 4 which come to rest opposite corresponding first bays 3 in the lower part in the closed state of the fastener. A second cavity 18 which is completely surrounded is established by the holding stirrup 14 between the holding stirrup 14 and the closing stirrup 16. The closing stirrup 16 is also structured in that it has additional further cavities 19. These cavities 19 serve to increase the rigidity to bending of the closing stirrup 16 with minimal additional expenditure in material, a certain degree of resilience existing in relation to the holding stirrup 14.

The hinge-like joint 6 is formed by the co-operation of two joint lugs 7, 7' (only one being shown in the side view) and two joint pins 8 (only one being shown in the side view). The joint pin 8 has a smaller peripheral cross section than the joint eye formed by the joint lug 7. The hinge-like joint 6 therefore allows play between the lower part 1 and the upper part 2. In the embodiment illustrated, the joint pin 8 has the cross sectional shape of an equilateral triangle.

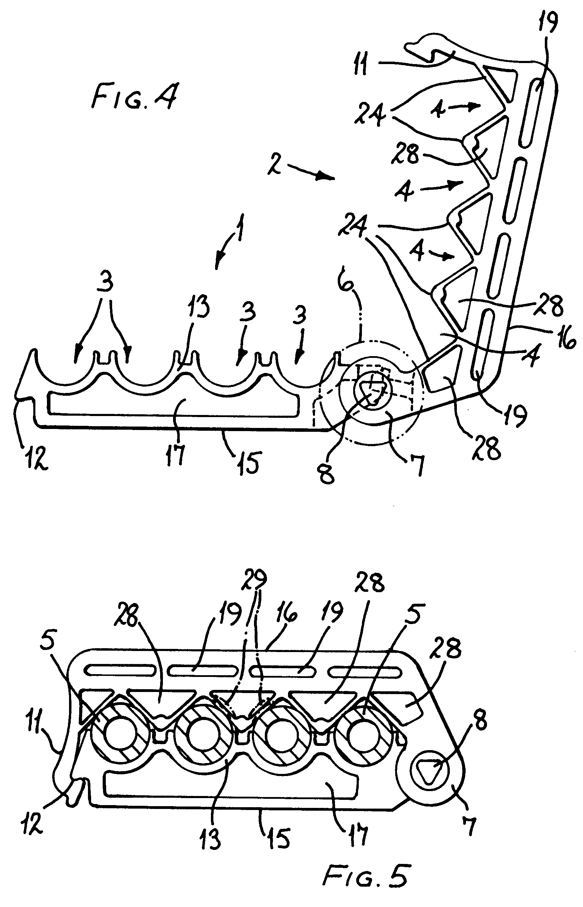

A sectional view of the region of the hinge-like joint 6 is shown in detail in Figure 3. Figure 3 shows the second joint lug 7' not shown in Figure 1. A joint catch beam 9 is shaped between the joint lugs 7, 7' shaped on the upper part 2. It can be brought into engagement with a catch nose 10 shaped at the end of the lower part 1 when the fastener is in its closed position.

Figure 2 shows the fastener from Figure 1 in its closed position. Four lines 5 are held by the fastener. In the closed position, the catch beam 11 at the end of the upper part 2 engages in the catch nose 12 shaped at the end of the lower part. In this position, the joint catch beam 9 is also caught behind the joint catch nose 10 so the lower part 1 and the upper part 2 are connected to one another under tension at both ends via a catch joint. The play existing in the hinge-like joint 6 allows the joint catch beam 9 to engage behind the joint catch nose 10. The tension on the snap connections is caused by the elastic deformation of the holding stirrup 14 which is deformed toward the closing stirrup 16 during the closure of the fastener. This is possible providing that it rests on the closing stirrup 16 at specific points. On the one hand, locking against transverse displacement of the lines can be achieved and on the other hand it is possible to cause the bridge 13 to be displaced into the cavity 17 and therefore to compensate tolerances in the case of lines with an excessively great diameter. Owing to the bridge 13 in the lower part 1 there is no continuously rigid connection between the lines 5 and a support (not shown) on which the underside of the first base beam 15 is fastened. The lines 5 can therefore perform slight movements even though they are secured between the first bays 3 and the second bays 4. The hinge-like joint 6 serves predominantly to provide the fastener as a unit during assembly and the closed position can therefore be achieved by a simple pivoting movement. The reciprocal positioning of the lower part 1 and of the upper part 2 during the closure of the fasteners is therefore unnecessary.

Figure 4 shows a second embodiment of the fastener according to the invention. The lower part 1 and the hinge-like joint 6 correspond in their construction to the same elements of the first embodiment. In the second embodiment also, the upper part 2 has a second closing stirrup 16 at one end of which the joint lugs 7 of the hinge-like joint 6 are shaped. At the opposite end of the closing stirrup 16 there is shaped a catch beam 11 which corresponds to that of the first embodiment and can be brought into engagement with the catch nose 12 shaped at the end of the lower part 1 in the closed position of the fastener. A plurality of holding stirrups 24 are shaped next to one another on the closing stirrup 16. Each holding stirrup 24 has the shape of the side of an equilateral triangle which extends over the closing stirrup 16. Each of the holding stirrups 24 embraces a second cavity 28 which is completely surrounded. At the end regions of the closing stirrup 16, the holding stirrup consists of only one side of a corresponding equilateral triangle. The second bays 4 which in turn again have the form of equilateral triangles are established by the arrangement of the holding stirrup 24 next to one another. Similarly to the closing stirrup 16 in the first embodiment, the closing stirrup 16 in the second embodiment also has further cavities 19 in addition to the cavities 28 established by the holding stirrups 24. The cavities 19 and 28 have the same function as the cavities 19 and 18 in the first embodiment. Furthermore, the webs limiting the triangles can be displaced into the cavities 28 to compensate tolerances in the diameters of the lines, as indicated in broken lines 29.

Figure 5 shows the second embodiment in its closed state, four lines 5 being held in this device. The catch beam 11 again engages in the catch nose 12 and the joint catch beam 9 correspondingly engages in the joint catch nose 10 (not shown in the drawings). In the closed position, the holding stirrups 24 are deformed 29 in the region of the sides of the equilateral triangles. A pressure is therefore exerted on the snap connections at the ends of the device so they can no longer be released. The holding stirrups 14 and 24 can be deformed less easily than the bridge 13 which is opposed to it in the closed position of the device and generally receives the majority of the necessary deformation.

The essence of the present invention is illustrated in the drawings. The particular advantage of the device is that a rigid connection between the lines 5 or to a support is avoided by the provision of several cavities 17, 18, 19 and 28. In particular, the transmission of shaking or vibrations of the support, in particular those in the vicinity of a resonance frequency of the lines 5 to be received, onto the lines 5 is also avoided. Furthermore, any tolerances occurring in the diameter of the lines to be fastened can be compensated.

The fastener according to the invention is preferably produced by the injection moulding of plastics material. It is advantageous to employ the so-called single shot process, in particular in the preferred embodiment in which the upper part 2 and lower part 1 are connected to a hinge-like joint 6 having play. In this case, the fastener can be produced as a unit in one moulding process. The fastener is therefore immediately available for the assembly of lines 5 without further machining or joining processes as the hinge-like joint 6 already nests during the single shot moulding process. Economic and reliable fastening of lines 5 on a support can be guaranteed with such a fastener.

## Claims

**1** Fastener for lines (5) characterised in that the device comprises a beam-like lower part (1) having at least one first resilient bay (3) which is adapted to the line (5) to be fastened, a closing stirrup-shaped upper part (2) having at least one second resilient bay (4) which is adapted to the line (5) to be fastened, the upper part (2) and/or the lower part (1) having at least one cavity (17, 18, 19) which gives the device resilience.

**2** Fastener according to claim 1, characterised in that the lower part (1) is formed by a base body (15) with a bridge (13) which rests thereon and is supported at the ends of the base body (15), the bridge (13) having the first bays (3) and enclosing a first cavity (17).

**3** Fastener according to one of claims 1 or 2, characterised in that the upper part (2) is formed from a second closing stirrup (16) on which there is shaped at least one resilient holding stirrup (14, 24) which encloses a second cavity (18, 28).

**4** Fastener according to claim 3, characterised in that the upper part (2) and/or the lower part (1) have further cavities (19) for increasing the resilience of the device.

**5** Fastener according to one of the preceding claims, characterised in that the upper part (2) and the lower part (1) are connected to one another in an end region via a hinge-like joint (6) and can be locked in a closed position in the opposite end region via a snap connection (11, 12).

**6** Fastener according to claim 5, characterised in that the hinge-like joint (6) consists of at least one joint lug (7) and correspondingly at least one joint pin (8), the peripheral cross section of the joint pin (8) being smaller than the orifice in the joint lug (7).

**7** Fastener according to claim 6, characterised in that in the region of the hinge-like joint (6) there are provided a joint catch nose (10) and a joint catch beam (11) which can be brought into engagement in the closed position of the device by utilising the play existing in the joint (6).

**8** Fastener according to claim 7, characterised in that the joint catch nose (10) and the joint catch beam (11) are arranged in a region between two joint lugs (7) and two joint pins (8).

**9** Fastener according to claim 7, characterised in that the joint catch nose (10) is shaped on the joint pin (8) and the joint catch beam (11) is formed by an elongate portion of the joint lug (7).

**10** Fastener according to one of claims 2 to 7, characterised in that the bridge (13) has greater rigidity than the holding stirrup (14).

**11** Fastener according to one of the preceding claims, characterised in that the first bays (3) are shaped such that they surround the lines (5) which can be held therein by more than 180°.

**12** Fastener according to one of the preceding claims, characterised in that the first bays (3) and second bays (4) are designed to receive lines (5) with an approximately round cross section.

**13** Fastener according to one of the preceding claims, characterised in that bays (3, 4) are provided for more than two, preferably four, lines (5).

**14** Fastener according to one of the preceding claims, characterised in that lines (5) of different diameters can be fastened.

**15** Fastener according to one of the preceding claims, characterised in that a weld stud receiver is provided in the lower part (1) for connecting the device to a support.

**16** Fastener according to one of the preceding claims, characterised in that the internal contour of the closing stirrup (16) engages with the external contour of the resilient holding stirrup (14) in the closed state such that the lines are locked against transverse displacement.

**17** Fastener according to one of the preceding claims, characterised in that the internal contour of the closing stirrup (16) rests on the external contour of the resilient holding stirrup (14) in the closed state such that a compensating displacement of the bridge (13) in the cavity (17) is enforced in the case of lines having an excessive diameter.

**18** Fastener according to one of the preceding claims, characterised in that the internal contour of the holding stirrup (14) has deformable webs (29) which are deformed into cavities (28) in the closed state in the case of lines having an excessive diameter.

**19** Fastener according to one of the preceding claims, characterised in that the device is produced by the injection moulding of plastics.

**20** Fastener according to claim 16, characterised in that the device is produced as a unit by a single shot process.
